# EUROPEAN PATENT SPECIFICATION

(11) **EP 3 063 420 B1**
(45) Date of publication and mention of the grant of the patent: **23.08.2017**
(21) Application number: 14795653.6
(22) Date of filing: 16.10.2014
(51) Int. Cl.: B23P 11/00, F16C 3/20, F16B 5/02, F16B 31/00, F16C 3/12

(54) **METHOD FOR PREVENTING FRETTING, TOOL FOR DEFORMING A CONTACT SURFACE AND USE OF THE TOOL**
VERFAHREN ZUR VERHINDERUNG VON REIBVERSCHLEISS, WERKZEUG ZUR VERFORMUNG EINER KONTAKTFLÄCHE UND VERWENDUNG DES WERKZEUGS
PROCÉDÉ DE PROTECTION CONTRE L'USURE DE CONTACT, OUTIL POUR DÉFORMER UNE SURFACE DE CONTACT ET UTILISATION DE L'OUTIL

(30) Priority: 31.10.2013 FI 20136066
(43) Date of publication of application: 07.09.2016
(73) Proprietor: WÄRTSILÄ FINLAND OY, 65380 Vaasa (FI)
(72) Inventor: MÄNTYLÄ, Antti, FI-65100 Vaasa (FI)
(74) Representative: Berggren Oy, Helsinki & Oulu
(86) International application number: PCT/FI2014/050785
(87) International publication number: WO 2015/063368

(56) References cited:
- EP-A1- 2 538 102
- EP-A2- 0 402 607
- DE-A1-102007 037 461
- GB-A- 628 474
- GB-A- 925 478
- US-A- 3 464 746
- US-A1- 2006 033 381
- US-A1- 2011 120 261

## Description

### Technical field of the invention

The present invention relates to a method for preventing fretting occurring in a joint between contact surfaces of two parts, as defined in the preamble of claim 1. The invention also concerns a tool for deforming a contact surface of a part in accordance with the preamble of independent claim 8 and the use of such a tool.

Such a method and such a tool are known from US 2006/0033381 A1.

### Background of the invention

Fretting refers to wear damage that is caused when two surfaces move in relation to each other with very small amplitudes. A typical cause of fretting is vibration under load. Fretting is a common problem in machines, where moving parts cause vibrations. A typical example of such machines is a piston engine, where movement of the pistons and pressure variations in the cylinders cause movements of the contact surfaces between various parts. Joints, where the contact pressure is uneven are more susceptible to fretting. At the areas of low contact pressure, the contact surfaces of the joint slide more easily in relation to each other, and this causes fretting. Bolt joints are a typical example of joints with uneven contact pressure. The tension of a bolt causes deformation of the clamped parts around the bolt holes.

An example of such a bolt joint is the joint between the crankshaft and a counterweight of a piston engine. Each counterweight is typically attached to the crankshaft with two stud bolts. The crankshaft is provided with threaded blind holes for the stud bolts and each counterweight is provided with corresponding through holes. One end of each stud bolt is inserted into a hole of the crankshaft and engaged with the internal thread of the hole. The stud bolts are then arranged into the bolt holes of the counterweight and a nut is tightened around the second end of each stud bolt. For achieving accurate control of the tensioning force, pretensioning of stud bolts is used. The stud bolts are pretensioned, usually by a hydraulic tool. A nut can then be tightened around the stud bolt by using only a small torque. When pressure is released from the hydraulic tool, the tension of the stud bolt is proportional to the extension of the stud bolt. Because of the pretensioning force that goes through the joint, the contact pressure between the crankshaft and the counterweight is not even.

Even though the contact surfaces of the joint have been flat before the pretensioning, the pretensioning deforms the contact surfaces. The unevenly distributed contact pressure in the joint significantly increases the fretting, and thus increases the risk of a failure of the joint.

### Summary of the invention

An object of the present invention is to provide a method for preventing fretting occurring in a joint between a contact surface of a first part and a contact surface of a second part, which parts are clamped together in a manner causing deformation of the contact surface of the first part. The characterizing features of the method according to the invention are given in the characterizing part of claim 1. Another object of the invention is to provide a tool for deforming a contact surface of a part to be clamped together with another part by at least one bolt, the part comprising a bolt hole having an opening to a contact surface. The characterizing features of the tool are given in the characterizing part of the other independent claim.

In the method according to the invention, while not being clamped together with the second part, the contact surface of the first part is deformed to simulate the shape of the contact surface in the clamped state, and while keeping the contact surface in the deformed state, the contact surface is reshaped to eliminate the effect of the deformation on the shape of the contact surface.

With the method according to the invention, the contact surface of at least one of the parts to be clamped together is reshaped in such a manner that when the parts are clamped together, the contact surface between the parts is even. Also the contact pressure between the parts is thus more evenly distributed, which reduces movements of the parts in relation to each other and prevents effectively fretting.

The procedure can additionally be applied to the contact surface of the second part. By applying the method to both parts, even more pressure can be distributed away from the deformed areas. The method is applicable particularly to bolt joints, for instance joints comprising at least one pretensioned stud bolt. If the method is applied to a bolt joint, the shape of the contact surface in the clamped state can be simulated by applying to a bolt hole of the first part and/or the second part a tension simulating the tension in the clamped state. The contact surface can be reshaped, for instance, by machining.

The tool according to the invention is configured to be at least partly insertable into the bolt hole and comprises means for engaging the tool with the bolt hole at a first location and at a second location, which second location is at a distance from the first location in the longitudinal direction of the bolt hole and closer to the contact surface than the first location. The tool is capable of exerting a supporting force on the bolt hole at the first location, which supporting force acts in the longitudinal direction of the bolt hole with a direction away from the contact surface, and exerting an opposite force on the bolt hole at the second location for deforming the contact surface of the part to be clamped together with the other part to simulate the shape of the contact surface in the clamped state.

The use of the deforming tool allows reshaping of a contact surface to eliminate the effect of the deformation, which is caused by the force created by the tension of bolts in a bolt joint.

The tool can be configured to exert the supporting force and the opposite force on the bolt hole when the tool or a part of the tool is rotated. According to an embodiment of the invention, the means for engaging the tool with the bolt hole comprise external threads. The means for engaging the tool with the bolt hole can also comprise a tip which is arranged at a first end of the tool and can be arranged against an end of a blind hole. A second end of the tool can be provided with a socket, which can be engaged with a tightening tool for tightening the tool in the bolt hole.

According to an embodiment of the invention, the tool comprises a first part and a second part, which second part is rotatable in relation to the first part, the means for engaging the tool with the bolt hole comprising a first thread, which is arranged in the first part for engaging the tool with the bolt hole at the first location, and a second thread, which is arranged in the second part for engaging the tool with the bolt hole at the second location. This kind of tool is suitable for through holes.

The tool can comprise a thrust bearing, which is arranged between the first part and the second part for allowing rotation of the second part in relation to the first part. Each end of the tool can be provided with a socket, which can be engaged with a tightening tool for tightening the tool in the bolt hole.

### Brief description of the drawings

Embodiments of the invention are described below in more detail with reference to the accompanying drawings, in which
Fig. 1 shows a cross-sectional view of a crankshaft of a piston engine,
Fig. 2 shows an enlarged view of detail A in Fig. 1,
Fig. 3 shows the effect of pretensioning on the shape of a contact surface in a bolt joint,
Fig. 4 shows a counterweight for a crankshaft of a piston engine, and
Fig. 5 shows an enlarged view of detail B in Fig. 4.

### Description of embodiments of the invention

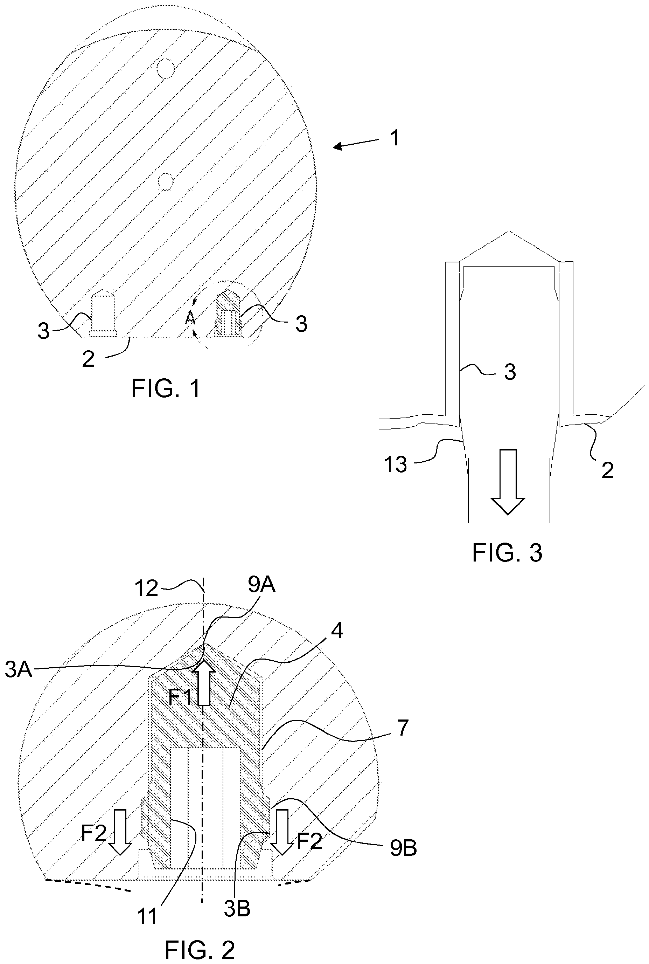

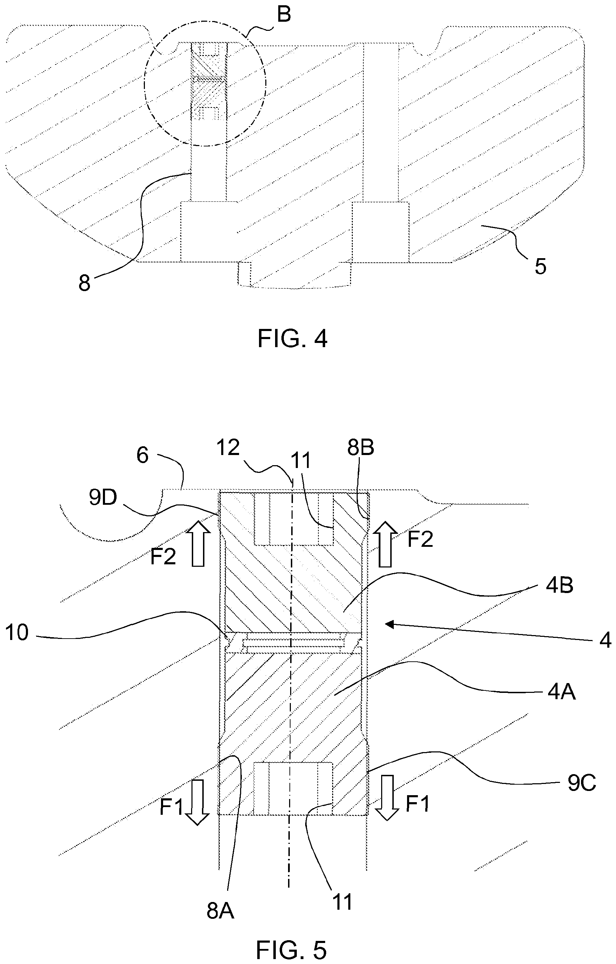

Figure 1 shows a cross-sectional view of a crankshaft 1 of a piston engine. For balancing the mass forces of the engine, counterweights are attached to the crankshaft 1. A counterweight 5 to be used together with a crankshaft 1 is shown in figure 4. The crankshaft 1 is provided with a flat contact surface 2 for each counterweight 5. Also the counterweight 5 is provided with a contact surface 6, which can be arranged against the contact surface 2 of the crankshaft 1. The counterweight 5 of figure 4 is provided with two bolt holes 8. A contact surface 6 is arranged around each bolt hole 8 and raised from the level of the area around the contact surfaces 6. A contact surface 6 of the counterweight 2 is arranged against the contact surface 2 of the crankshaft 1, and the counterweight 5 is attached to the crankshaft 1 with two stud bolts. The crankshaft 1 is provided with two identical bolt holes 3 for the stud bolts. Each bolt hole 3 is provided with an internal thread 7, which is engaged with a first end of the stud bolt.

The counterweight 5 is typically attached to the crankshaft 1 in the following manner: A first end of each stud bolt is inserted into a bolt hole 3 of the crankshaft 1. The stud bolt is rotated for engaging the external thread of the stud bolt with the internal thread 7 of the bolt hole 3. The counterweight 5 is then arranged against the crankshaft 1 such that the contact surfaces 6 of the counterweight 5 lie against the contact surface 2 of the crankshaft 1 and the stud bolts go through the bolt holes 8 of the counterweight 5. The part of the stud bolt inside the bolt hole 8 of the counterweight 5 is not provided with a thread. A nut is arranged around the second end of each stud bolt. The nut is rotated by using only a small torque so that the nut rests against a surface of the counterweight 5. A hydraulic pretensioning tool is then arranged around the second end of the stud bolt. The pretensioning tool comprises a gripping means, such as a sleeve with an internal thread, which is engaged with the second end of the stud bolt. The body of the pretensioning tool is supported against the counterweight 5. When the pretensioning tool is pressurized with a predetermined pressure, the gripping means pulls the second end of the stud bolt and the stud bolt is extended. The hydraulic pressure in the pretensioning tool is maintained until the nut has been rotated to the correct position. The nut is rotated by using a small predetermined torque. When the nut has been rotated against the surface of the counterweight 5, the pressure is released from the pretensioning tool.

The pretensioning force in the stud bolts leads to deformation of the crankshaft 1 and the counterweight 5. Although the contact surface 2 of the crankshaft 1 and the contact surfaces 6 of the counterweight 5 have been flat before attaching the parts together, in the clamped assembly the contact surfaces 2, 6 are deformed. Fig. 3 shows how the contact surface 2 of the crankshaft 1 is deformed around the bolt holes 3, in which stud bolts 13 are arranged. Due to the deformation of the contact surfaces 2, 6, the contact pressure between the crankshaft 1 and the counterweight 5 is not even. Because of the uneven contact pressure, the contact surfaces 2, 6 of the crankshaft 1 and the counterweight 5 slide against each other more easily in places where the contact pressure is low. Consequently, the fretting phenomenon is strengthened.

To prevent fretting in the joint between the crankshaft 1 and the counterweight 5, the effect of the pretensioning on the shape of the contact surfaces 2, 6 should be compensated. According to the invention, this is done by deforming the contact surface 2 of the crankshaft 1 and/or the contact surfaces 6 of the counterweight 5 to simulate the shape of the contact surface 2, 6 in the clamped state, and while keeping the contact surface 2, 6 in the deformed state, the contact surface 2, 6 is reshaped to eliminate the effect of the deformation on the shape of the contact surface 2, 6. The shape of the contact surface 2 of the crankshaft 1 in the clamped state can be simulated by applying to the bolt hole 3 of the crankshaft 1 a tension simulating the tension in the clamped state. The shape of the contact surface 6 of the counterweight 5 can be simulated in the same way. The contact surface 2, 6 can be reshaped, for instance, by machining. To achieve as evenly distributed contact pressure in the joint as possible, the deformation and reshaping process can be applied to both the crankshaft 1 and the counterweight 5.

In figure 2, which is an enlarged view of detail A in figure 1, a tool 4 for deforming the contact surface 2 of the crankshaft 1 is shown. The tool 4 can be used for deforming a contact surface 2 of a part that is provided with a threaded blind hole. The tool 4 comprises an elongated part, which can be inserted at least partly into the bolt hole 3. The length of the tool 4 is preferably chosen so that it fits completely inside the bolt hole 3, since this makes the reshaping of the contact surface 2 easier. The tool 4 can be engaged with the bolt hole 3 at a first location 3A and at a second location 3B, which are apart from each other in the longitudinal direction 12 of the bolt hole 3. The second location 3B is closer to the contact surface 2 of the crankshaft 1 than the first location 3A. The tool 4 has a first end, which is conical. The tip 9A of the tool 4 at the first end can be arranged against the bottom of a blind hole 3. Close to a second end of the tool 4, the outer surface of the tool 4 is provided with an external thread 9B, which is configured to fit together with the thread 7 of the bolt hole 3. In the area between the thread 9B and the tip 9A of the tool 4, the diameter of the tool 4 is slightly smaller than the diameter of the bolt hole 3. Between the thread 9B and the tip 9A, the tool 4 is thus not in contact with the bolt hole 3. The second end of the tool 4 is provided with a socket 11. In the embodiment of figure 2, the socket 11 is a hex socket, but also some other shape could be used. A tightening tool, such as a hex key or a hydraulic tightening tool, can be engaged with the socket 11 for tightening the tool 4 in the bolt hole 3. The tool 4 is capable of exerting a supporting force F1 on the bolt hole 3 at the first location 3A in the longitudinal direction 12 of the bolt hole 3 with a direction away from the contact surface 2, and an opposite force F2 at the second location 3B for deforming the contact surface 2 of the crankshaft 1. The forces F1, F2 are created by rotating the tool 4 in relation to the bolt hole 3. The tool 4 has a rigid structure for minimizing the deformation of the tool 4. The tool 4 can be made of a metal or an alloy, such as steel. Preferably, the elastic modulus of the material of the tool 4 is higher than the elastic modulus of the material of the crankshaft 1.

The deforming tool 4 of figure 2 is used in the following manner: The tool 4 is inserted into a bolt hole 3 of the crankshaft 1. A hex key or another suitable tool is used for tightening the tool 4 in the bolt hole 3 in such a way that the tip 9A of the tool 4 is in contact with the bottom 3A of the bolt hole 3 and the thread 9B of the tool 4 is engaged with the thread 7 of the bolt hole 3. Tightening of the tool 4 is continued until a predetermined tightening torque is reached. The tip 9A exerts a supporting force F1 on the bottom of the bolt hole 3 and a counter force F2 acts on the thread 7 of the bolt hole 3. The force F2 acts close to the contact surface 2, which is deformed by the force F2. The tightening torque of the tool 4 is determined so that the deformation of the contact surface 2 by the tool 4 simulates the effect of the pretensioning on the shape of the contact surface 2. While the contact surface 2 is kept in the deformed state by the deforming tool 4, the contact surface 2 is machined flat. The tool 4 is then removed from the bolt hole 3. After the reshaping of the contact surface 2, the contact surface 2 is not flat when the tool 4 has been removed. However, when the counterweight 5 is attached to the crankshaft 1 in accordance with the process described above, the pretensioning force of the stud bolts 13 deforms the contact surface 2, and in the completed joint, the contact surface 2 is essentially flat. The contact pressure in the joint between the crankshaft 1 and the counterweight 5 is thus more evenly distributed and fretting in the joint is reduced.

Figure 5 shows another embodiment of the deforming tool 4. The tool 4 of the embodiment of figure 5 is suitable for through holes 8. In the embodiment of the figure, the tool 4 is configured so that it can be fitted completely inside the bolt hole 8. However, this is not necessary, but it is sufficient that the end of the tool 4 that is on the side of the contact surface 6 is inside the counterweight 5 in order to allow machining of the contact surface 6. The tool 4 comprises a first part 4A and a second part 4B. The second part 4B can be rotated in relation to the first part 4A. For allowing the rotation, the tool 4 comprises a thrust bearing 10, which is arranged between the first part 4A and the second part 4B. The tool 4 has a first end and a second end. Each end of the tool 4 is provided with a socket 11 for allowing tightening of the tool 4 in the bolt hole 8. Hex sockets are shown in figure 5, but some other type of socket could also be used. The tool 4 comprises external threads 9C, 9D at both ends on the outer surface of the tool 4. The bolt hole 8 does not need to be provided with threads for attaching the counterweight 5 to the crankshaft 1, but the bolt hole 8 is provided with threads 8A, 8B for the tool 4. A first thread 8A can be engaged with the thread 9C in the first part 4A of the tool 4 and a second thread 8B can be engaged with the thread 9D in the second part 4B of the tool 4. The second thread 8B of the bolt hole 8 is arranged close to the contact surface 6. In the area between the first thread 9C and the second thread 9D, the diameter of the tool 4 is slightly smaller than the diameter of the bolt hole 8. Between the first thread 9C and the second thread 9D, the tool 4 is thus not in contact with the bolt hole 8. Also the tool 4 of figure 5 has a rigid structure and the material is selected according to the same principles as the material of the tool 4 of figure 2.

The tool 4 of figure 5 is used in a similar way as the tool 4 of figure 2. The tool 4 is screwed into the bolt hole 8 in such a way that the first thread 9C of the tool 4 is engaged with the first thread 8A of the bolt hole 8 and the second thread 9D of the tool 4 is engaged with the second thread 8B of the bolt hole 8. By using a suitable tool, the first part 4A of the tool 4 is kept stationary in relation to the bolt hole 8, and tightening of the second part 4B of the tool 4 is continued. The thrust bearing 10 between the first part 4A and the second part 4B allows the second part 4B to turn in relation to the first part 4A about the longitudinal axis 12 of the bolt hole 8. The thread 9C of the first part 4A of the tool 4 exerts a supporting force F1 on the first thread 8A of the bolt hole 8. The supporting force F1 acts in the direction of the longitudinal axis 12 of the bolt hole 8 with a direction away from the contact surface 6. A counter force F2 is exerted by the thread 9D of the second part 4B of the tool 4 on the second thread 8B of the bolt hole 8. The force F2 acts close to the contact surface 6 of the counterweight 5 and deforms the contact surface 6. While the contact surface 6 is kept in the deformed state by the deforming tool 4, the contact surface 6 is machined flat. The tool 4 is then removed from the bolt hole 8.

Also some other kind of a deforming tool could be used to simulate the effect of the pretensioning on the shape of the contact surface. For instance, the bolt holes could be provided with notches or grooves, with which suitable engaging means of the tool could cooperate. The tool could be extendable, for instance by hydraulic pressure, to exert a force on the bolt hole at a first location and a second location.

Although the method for preventing fretting has been described above by referring to a joint of a crankshaft and a counterweight, it can be used in many other applications as well. Basically, the method can be applied to any bolt joint, where fretting phenomenon can occur. The bolts need not to be pretensioned, but the method can be applied also to other kinds of bolt joints. The contact surfaces do not need to be flat, but they can also have a different shape, such as cylindrical or spherical shape. The method can also be applied to other kinds of joints than bolt joints, as long as the joint involves clamping, which causes deformation of the contact surfaces. However, the deforming tool may need to be modified to enable the simulation of the deformation caused by the clamping.

## Claims

1. A method for preventing fretting occurring in a joint between a contact surface (2) of a first part (1) and a contact surface (6) of a second part (5), which parts (1, 5) are clamped together in a manner causing deformation of the contact surface (2) of the first part (1), **characterized in that** while not being clamped together with the second part (5), the contact surface (2) of the first part (1) is deformed to simulate the shape of the contact surface (2) in the clamped state, and while keeping the contact surface (2) in the deformed state, the contact surface (2) is reshaped to eliminate the effect of the deformation on the shape of the contact surface (2).

2. A method according to claim 1, **characterized in that** the joint is a bolt joint.

3. A method according to claim 2, **characterized in that** the joint comprises at least one pre-tensioned stud bolt (13).

4. A method according to claim 2 or 3, **characterized in that** the shape of the contact surface (2) in the clamped state is simulated by applying to a bolt hole (3) of the first part (1) a tension simulating the tension in the clamped state.

5. A method according to any of the preceding claims, **characterized in that** the contact surface (2) is reshaped by machining.

6. A method according to any of the preceding claims, **characterized in that** one of the parts is a crankshaft (1) and the other part is a counterweight (5) of the crankshaft (1).

7. A method according to any of the preceding claims, **characterized in that** the procedure applied to the contact surface (2) of the first part (1) is also applied to the contact surface (6) of the second part (5).

8. A tool (4) for deforming a contact surface (2, 6) of a part (1, 5) to be clamped together with another part (1, 5) by at least one bolt, the part (1, 5) comprising a bolt hole (3, 8) having an opening to the contact surface (2, 6), **characterized in that** the tool (4) is configured to be at least partly insertable into the bolt hole (3, 8) and comprises means (9A, 9B, 9C, 9D) for engaging the tool (4) with the bolt hole (3, 8) at a first location (3A, 8A) and at a second location (3B, 8B), which second location (3B, 8B) is at a distance from the first location (3A, 8A) in the longitudinal direction (12) of the bolt hole (3, 8) and closer to the contact surface (2, 6) than the first location (3A, 8A), the tool (4) being capable of exerting a supporting force (F1) on the bolt hole (3, 8) at the first location (3A, 8A), which supporting force (F1) acts in the longitudinal direction (12) of the bolt hole (3) with a direction away from the contact surface (2), and exerting an opposite force (F2) on the bolt hole (3, 8) at the second location (3B, 8B) for deforming the contact surface (2, 6) of the part (1, 5) to be clamped together with the other part (1, 5) to simulate the shape of the contact surface (2, 6) in the clamped state.

9. A tool (4) according to claim 8, **characterized in that** the tool (4) is configured to exert the supporting force (F1) and the opposite force (F2) on the bolt hole (3, 8) when the tool (4) or a part of the tool (4) is rotated.

10. A tool according to claim 8 or 9, **characterized in that** the means for engaging the tool (4) with the bolt hole (3, 8) comprise external threads (9B, 9C, 9D).

11. A tool (4) according to any of claims 8-10, **characterized in that** the means for engaging the tool (4) with the bolt hole (3, 8) comprise a tip (9A) which is arranged at a first end of the tool (4) and can be arranged against an end (3A) of a blind hole (3).

12. A tool (4) according to claim 11, **characterized in that** a second end of the tool (4) is provided with a socket (11), which can be engaged with a tightening tool for tightening the tool (4) in the bolt hole (3).

13. A tool (4) according to claim 10, **characterized in that** the tool (4) comprises a first part (4A) and a second part (4B), which second part (4B) is rotatable in relation to the first part (4A), the means for engaging the tool (4) with the bolt hole (3, 8) comprising a first thread (9C), which is arranged in the first part (4A) for engaging the tool (4) with the bolt hole (8) at the first location (8A), and a second thread (9D), which is arranged in the second part (4B) for engaging the tool (4) with the bolt hole (8) at the second location (8B).

14. A tool (4) according to claim 13, **characterized in that** the tool (4) comprises a thrust bearing (10), which is arranged between the first part (4A) and the second part (4B) for allowing rotation of the second part (4B) in relation to the first part (4A).

15. A tool (4) according to claim 13 or 14, **characterized in that** each end of the tool (4) is provided with a socket (11), which can be engaged with a tightening tool for tightening the tool (4) in the bolt hole (8).

16. Use of the tool (4) according to any of claims 8-15 for deforming the contact surface (2, 6) in the method according to any of claims 1-7.

## Patentansprüche

1. Verfahren zur Verhinderung von Reibverschleiss, der in einer Verbindungsstelle zwischen einer Berührungsfläche (2) eines ersten Teils (1) und einer Berührungsfläche (6) eines zweiten Teils (5) auftritt, wobei die Teile (1, 5) in einer Weise zusammengeklemmt sind, die eine Verformung der Berührungsfläche (2) des ersten Teils (1) bewirkt, **dadurch gekennzeichnet, dass** die Berührungsfläche (2) des ersten Teils (1), während sie nicht mit dem zweiten Teil (5) zusammengeklemmt ist, verformt wird, um der Gestalt der Berührungsfläche (2) in dem geklemmten Zustand zu gleichen, und während die Berührungsfläche (2) in dem verformten Zustand gehalten wird, die Berührungsfläche (2) erneut geformt wird, um die Wirkung der Verformung auf die Gestalt der Berührungsfläche (2) zu eliminieren.

2. Verfahren nach Anspruch 1, **dadurch gekennzeichnet, dass** die Verbindung eine Bolzenverbindung ist.

3. Verfahren nach Anspruch 2, **dadurch gekennzeichnet, dass** die Verbindung mindestens einen vorgespannten Gewindebolzen (13) aufweist.

4. Verfahren nach Anspruch 2 oder 3, **dadurch gekennzeichnet, dass** die Gestalt der Berührungsfläche (2) in dem geklemmten Zustand angeglichen wird, indem auf ein Bolzenloch (3) des ersten Teils (1) eine Spannung angewendet wird, die der Spannung in dem geklemmten Zustand ähnelt.

5. Verfahren nach einem beliebigen der vorhergehenden Ansprüche, **dadurch gekennzeichnet, dass** die Berührungsfläche (2) durch eine spanabhebende Bearbeitung erneut geformt wird.

6. Verfahren nach einem beliebigen der vorhergehenden Ansprüche, **dadurch gekennzeichnet, dass** eines der Teile eine Kurbelwelle (1) ist, und das andere Teil ein Gegengewicht (5) der Kurbelwelle (1) ist.

7. Verfahren nach einem beliebigen der vorhergehenden Ansprüche, **dadurch gekennzeichnet, dass** der Vorgang, der auf die Berührungsfläche (2) des ersten Teils (1) angewendet wird, auch auf die Berührungsfläche (6) des zweiten Teils (5) angewendet wird.

8. Werkzeug (4) zur Verformung einer Berührungsfläche (2, 6) eines Teils (1, 5), das mit einem weiteren Teil (1, 5) durch wenigstens einen Bolzen zusammenzuklemmen ist, wobei das Teil (1, 5) ein Bolzenloch (3, 8) mit einer Öffnung zu der Berührungsfläche (2, 6) aufweist, **dadurch gekennzeichnet, dass** das Werkzeug (4) dazu eingerichtet ist, sich zumindest teilweise in das Bolzenloch (3, 8) einführen zu lassen, und Mittel (9A, 9B, 9C, 9D) aufweist, um das Werkzeug (4) an einem ersten Ort (3A, 8A) und an einem zweiten Ort (3B, 8B) mit dem Bolzenloch (3, 8) in Eingriff zu bringen, wobei der zweite Ort (3B, 8B) gegenüber dem ersten Ort (3A, 8A) in der Längsrichtung (12) des Bolzenlochs (3, 8) einen Abstand aufweist und sich näher an der Berührungsfläche (2, 6) befindet als der erste Ort (3A, 8A), wobei das Werkzeug (4) in der Lage ist, an dem ersten Ort (3A, 8A) eine Stützkraft (F1) auf das Bolzenloch (3, 8) auszuüben, wobei die Stützkraft (F1) in der Längsrichtung (12) des Bolzenlochs (3) in einer Richtung weg von der Berührungsfläche (2) wirkt, und an dem zweiten Ort (3B, 8B) eine entgegengesetzte Kraft (F2) auf das Bolzenloch (3, 8) auszuüben, um die Berührungsfläche (2, 6) des Teils (1, 5), das mit dem anderen Teil (1, 5) zusammenzuklemmen ist, so zu verformen, dass sie der Gestalt der Berührungsfläche (2, 6) in dem geklemmten Zustand gleicht.

9. Werkzeug (4) nach Anspruch 8, **dadurch gekennzeichnet, dass** das Werkzeug (4) dazu eingerichtet ist, die Stützkraft (F1) und die entgegengesetzte Kraft (F2) auf das Bolzenloch (3, 8) auszuüben, wenn das Werkzeug (4) oder ein Teil des Werkzeugs (4) gedreht wird.

10. Werkzeug nach Anspruch 8 oder 9, **dadurch gekennzeichnet, dass** das Mittel für das Ineingriffbringen des Werkzeugs (4) mit dem Bolzenloch (3, 8) Außengewinde (9B, 9C, 9D) aufweist.

11. Werkzeug (4) nach einem beliebigen der Ansprüche 8 - 10, **dadurch gekennzeichnet, dass** das Mittel zum Ineingriffbringen des Werkzeugs (4) mit dem Bolzenloch (3, 8) ein Spitze (9A) aufweist, die an einem ersten Ende des Werkzeugs (4) angeordnet ist und gegen ein Ende (3A) eines Blindlochs (3) angeordnet sein kann.

12. Werkzeug (4) nach Anspruch 11, **dadurch gekennzeichnet, dass** ein zweites Ende des Werkzeugs (4) mit einem Aufnahmesockel (11) versehen ist, der mit einem Anziehwerkzeug in Eingriff gebracht werden kann, um das Werkzeug (4) in dem Bolzenloch (3) anzuziehen.

13. Werkzeug (4) nach Anspruch 10, **dadurch gekennzeichnet, dass** das Werkzeug (4) ein erstes Teil (4A) und ein zweites Teil (4B) aufweist, wobei das zweite Teil (4B) in Bezug auf das erste Teil (4A) drehbar ist, wobei das Mittel, das dazu dient, das Werkzeug (4) mit dem Bolzenloch (3, 8) in Eingriff zu bringen, ein erstes Gewinde (9C), das in dem ersten Teil (4A) angeordnet ist, um das Werkzeug (4) mit dem Bolzenloch (8) an dem ersten Ort (8A) in Eingriff zu bringen, und ein zweite Gewinde (9D) aufweist, das in dem zweiten Teil (4B) angeordnet ist, um das Werkzeug (4) an dem zweiten Ort (8B) mit dem Bolzenloch (8) in Eingriff zu bringen.

14. Werkzeug (4) nach Anspruch 13, **dadurch gekennzeichnet, dass** das Werkzeug (4) ein Drucklager (10) aufweist, das zwischen dem ersten Teil (4A) und dem zweiten Teil (4B) angeordnet ist, um eine Rotation des zweiten Teils (4B) in Bezug auf das erste Teil (4A) zu erlauben.

15. Werkzeug (4) nach Anspruch 13 oder 14, **dadurch gekennzeichnet, dass** jedes Ende des Werkzeugs (4) mit einem Aufnahmesockel (11) versehen ist, der mit einem Anziehwerkzeug in Eingriff gebracht werden kann, um das Werkzeug (4) in dem Bolzenloch (8) anzuziehen.

16. Verwendung des Werkzeugs (4) nach einem beliebigen der Ansprüche 8 - 15, um die Berührungsfläche (2, 6) in dem Verfahren nach einem beliebigen der Ansprüche 1 - 7 zu verformen.

## Revendications

1. Procédé de protection contre l'usure de contact se produisant dans une jointure entre une surface de contact (2) d'une première pièce (1) et une surface de contact (6) d'une seconde pièce (5), lesquelles pièces (1, 5) sont serrées ensemble d'une manière provoquant la déformation de la surface de contact (2) de la première pièce (1), **caractérisé en ce que**, alors qu'elle n'est pas serrée avec la seconde pièce (5), la surface de contact (2) de la première pièce (1) est déformée pour simuler la forme de la surface de contact (2) dans l'état serré et, tout en gardant la surface de contact (2) dans l'état déformé, la surface de contact (2) est remodelée pour éliminer l'effet de la déformation sur la forme de la surface de contact (2).

2. Procédé selon la revendication 1, **caractérisé en ce que** la jointure est une jointure à boulon.

3. Procédé selon la revendication 2, **caractérisé en ce que** la jointure comprend au moins un boulon fileté précontraint (13).

4. Procédé selon la revendication 2 ou 3, **caractérisé en ce que** la forme de la surface de contact (2) est simulée en appliquant à un trou de boulon (3) de la première pièce (1) une tension simulant la tension dans l'état serré.

5. Procédé selon l'une quelconque des revendications précédentes, **caractérisé en ce que** la surface de contact (2) est remodelée par usinage.

6. Procédé selon l'une quelconque des revendications précédentes, **caractérisé en ce qu'**une des pièces est un vilebrequin (1) et que l'autre pièce est un contrepoids (5) du vilebrequin (1).

7. Procédé selon l'une quelconque des revendications précédentes, **caractérisé en ce que** la procédure appliquée à la surface de contact (2) de la première pièce (1) est aussi appliqué à la surface de contact (6) de la seconde pièce (5).

8. Outil (4) destiné à la déformation d'une surface de contact (2, 6) d'une pièce (1, 5) serrée avec une autre pièce (1, 5) par au moins un boulon, la pièce (1, 5) comprenant un trou de boulon (3, 8) doté d'une ouverture sur la surface de contact (2, 6), **caractérisé en ce que** l'outil (4) est conçu pour être partiellement insérable dans le trou de boulon (3, 8) et comprend un moyen (9A, 9B, 9C, 9D) pour engager l'outil (4) dans le trou de boulon (3, 8) à un premier emplacement (3A, 8A) et à un second emplacement (3B, 8B), lequel second emplacement (3B, 8B) est à une distance du premier emplacement (3A, 8A) dans le sens longitudinal (12) du trou de boulon (3, 8) et plus proche de la surface de contact (2, 6) que le premier emplacement (3A, 8A), l'outil (4) étant capable d'exercer une force de soutien (F1) sur le trou de boulon (3, 8) au premier emplacement (3A, 8A), laquelle force de soutien (F1) agit dans le sens longitudinal (12) du trou de boulon (3) dans un sens s'éloignant de la surface de contact (2), et d'exercer une force opposée (F2) sur le trou de boulon (3, 8) au second emplacement (3B, 8B) pour déformer la surface de contact (2, 6) de la pièce (1, 5) serrée avec l'autre pièce (1, 5) pour simuler la forme de la surface de contact (2, 6) dans l'état serré.

9. Outil (4) selon la revendication 8, **caractérisé en ce que** l'outil (4) est conçu pour exercer la force de soutien (F1) et la force opposée (F2) sur le trou de boulon (3, 8) lorsque l'outil (4) ou une partie de l'outil (4) est tourné.

10. Outil (4) selon la revendication 8 ou 9, **caractérisé en ce que** le moyen d'engagement de l'outil (4) dans le trou de boulon (3, 8) comprend des filets externes (9B, 9C, 9D).

11. Outil (4) selon l'une quelconque des revendications 8 - 10, **caractérisé en ce que** le moyen d'engagement de l'outil (4) dans le trou de boulon (3, 8) comprend une pointe (9A) qui est disposée à une première extrémité de l'outil (4) et peut être disposée contre une extrémité (3A) d'un trou borgne (3).

12. Outil (4) selon la revendication 11, **caractérisé en ce qu'**une seconde extrémité de l'outil (4) est pourvue d'une douille (11) qui peut être engagée dans un outil de serrage pour serrer l'outil (4) dans le trou de boulon (3).

13. Outil (4) selon la revendication 10, **caractérisé en ce que** l'outil (4) comprend une première partie (4A) et une seconde partie (4B), laquelle seconde partie (4B) peut tourner par rapport à la première partie (4A), le moyen d'engagement de l'outil (4) dans le trou de boulon (3, 8) comprenant un premier filet (9C) qui est disposé dans la première partie (4A) pour l'engagement de l'outil (4) dans le trou de boulon (8) au premier emplacement (8A), et un second filet (9D), qui est disposé dans la seconde partie (4B) pour engager l'outil (4) dans le trou de boulon (8) au second emplacement (8B).

14. Outil (4) selon la revendication 13, **caractérisé en ce que** l'outil (4) comprend un palier de butée (10) qui est disposé entre la première partie (4A) et la seconde partie (4B) pour permettre la rotation de la seconde partie (4B) par rapport à la première partie (4A).

15. Outil (4) selon la revendication 13 ou 14, **caractérisé en ce que** chaque extrémité de l'outil (4) est pourvue d'une douille (11) chez qui peut être engagée dans un outil de serrage pour serrer l'outil (4) dans le trou de boulon (8).

16. Utilisation de l'outil (4) selon l'une quelconque des revendications 8 - 15 pour déformer la surface de contact (2, 6) dans le procédé selon les revendications 1 - 7.
